# EUROPEAN PATENT APPLICATION

(11) **EP 3 751 177 A1**
(43) Date of publication of application: **16.12.2020**
(21) Application number: 19830725.8
(22) Date of filing: 20.02.2019
(51) Int. Cl.: F16H 57/04, B60K 17/06, F16H 63/32

(54) **WORK VEHICLE**

(30) Priority: 03.07.2018 JP 2018126841
(71) Applicant: Komatsu Ltd., Minato-ku Tokyo 107-8414 (JP)
(72) Inventor: NAITO, Shinichi, Tokyo 107-8414 (JP); MIURA, Yusuke, Tokyo 107-8414 (JP); GO, Takahiro, Tokyo 107-8414 (JP)
(74) Representative: Flügel Preissner Schober Seidel
(86) International application number: PCT/JP2019/006309
(87) International publication number: WO 2020/008676

(57) **Abstract**

A transmission (20) has a rotating shaft (21), a coupling sleeve (23) that is able to rotate around the axial center (AX) of the rotating shaft (21), a shift fork (24) that is engaged with the external circumference of the coupling sleeve (23), and a shift shaft (25) that is parallel to the rotating shaft (21) and that supports the shift fork (24). The shift fork (24) has a support part (30) supported by the shift shaft (25), a first arm part (31) that extends from the supporting part (30) in the circumferential direction of the rotating shaft (21) and that is disposed above the coupling sleeve (23), and an oil receiving part (33) disposed on the first arm part (31). The oil receiving part (33) includes an elongated hole (33a) that extends in a direction perpendicular in the axial direction of the rotating shaft (21) in a top view.

## Description

### Technical Field

The present invention relates to a work vehicle.

### Background Art

In general, changes in the transmission gear ratio of a transmission are carried out by using a shift fork to cause a coupling sleeve that moves in the axial direction of an output shaft to mesh with a desired transmission gear.

Patent Document No. 1 proposes a method for supplying oil to an engagement part between the shift fork and the coupling sleeve by installing an oil receiving part that opens upward in the shift fork so that the oil is supplied from the oil receiving part through a supply channel that passes through the coupling sleeve. The oil receiving part captures oil that scatters inside the transmission case.

### CITATION LIST

### PATENT DOCUMENT

Patent Document No. 1: Japanese Unexamined Utility Model Publication Registration Publication No. S54-60167

### SUMMARY OF THE INVENTION

### Technical Problem

There is a desire to effectively capture oil with the oil receiving part while suppressing an increase in the size of the fork.

An object of the present invention is to provide a transmission that can effectively capture oil while suppressing an increase in the size of the fork, and a work vehicle comprising the transmission.

### SOLUTION TO PROBLEM

A transmission according to the present invention has a rotating shaft, a sleeve configured to rotate around an axial center of the rotating shaft, a fork engaged to an external circumference of the sleeve, and a shift shaft disposed parallel to the rotating shaft and supports the fork. The fork includes a support part supported by the shift shaft, a first arm part extending from the support part in a circumferential direction of the rotating shaft and disposed above the sleeve, and an oil receiving part disposed on the first arm part. The oil receiving part has an elongated hole that extends in a direction perpendicular to the axial direction of the rotating shaft in a top view.

### ADVANTAGEOUS EFFECTS OF INVENTION

According to the present invention, there is provided a transmission that can effectively capture oil while suppressing an increase in the size of the fork, and a work vehicle comprising the transmission.

### Brief Description of Drawings

FIG. 1 is a perspective view illustrating an internal structure of a transmission device.
FIG. 2 is a perspective view illustrating an internal structure of the transmission device.
FIG. 3 is a cross-partal view of a transmission 20 parallel to a rotating shaft.
FIG. 4 is a side view of a shift fork seen from the axial direction of the rotating shaft.
FIG. 5 is a perspective view of the shift fork seen from above.
FIG. 6 is a perspective view of the shift fork seen from below.
FIG. 7 is a top view of the shift fork.
FIG. 8 is a development view of the external circumferential surface of the shift fork.

### Description of Embodiments

A gearbox that includes a transmission according to the present invention will be explained with reference to the drawings. The gearbox that includes the transmission according to the present invention can be applied to various types of vehicles such as a work vehicle (construction vehicle, agricultural vehicle, conveyance vehicle, etc.), an automobile, and a motorcycle or the like, and is especially applicable to a work vehicle. In the present embodiment, "up" and "down" are terms based on the vertical direction.

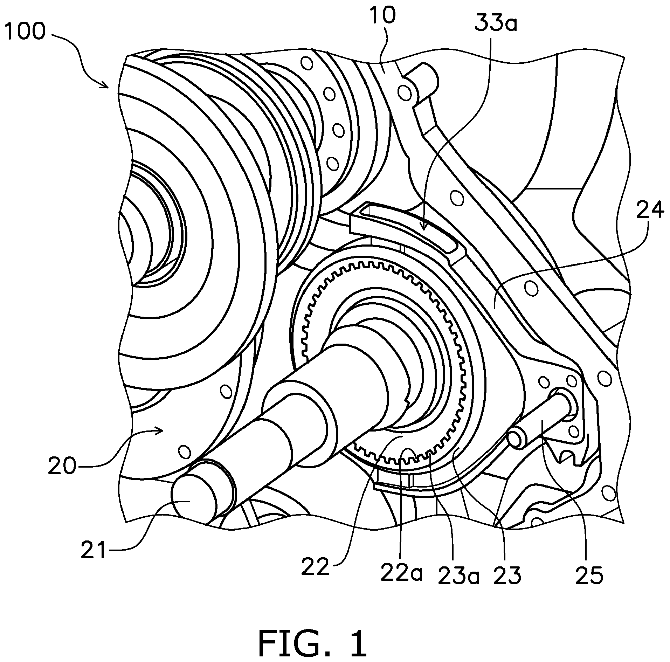

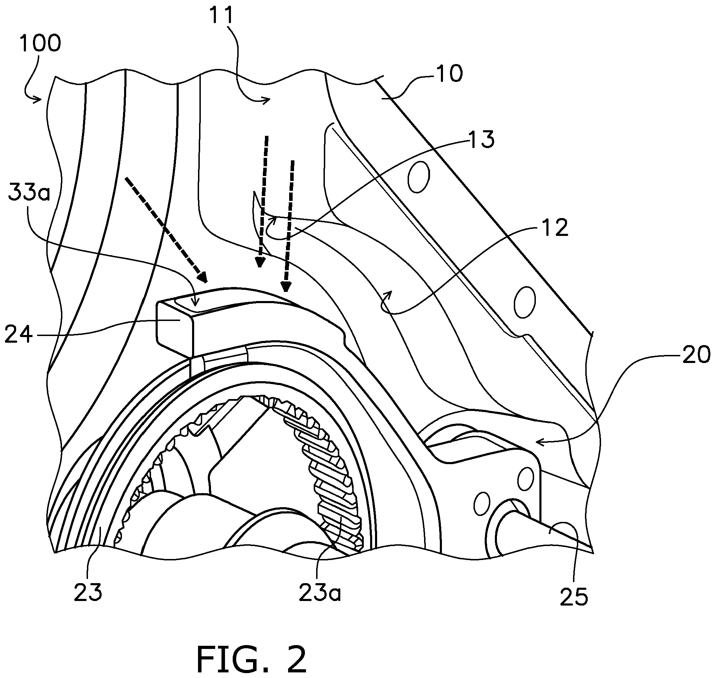

FIG. 1 and 2 are perspective views illustrating an internal structure of a gearbox 100 according to the present embodiment. Configuration elements are omitted as appropriate in order to illustrate the main parts of the present invention in FIG. 1 and 2.

The gearbox 100 is provided with a transmission case 10 and a transmission 20.

### (Transmission case 10)

The transmission case 10 contains the transmission 20. Oil is accumulated inside the transmission case 10 up to a predetermined height. A portion of the transmission 20 is immersed in the oil accumulated in the transmission case 10. The oil accumulated in the transmission case 10 scatters inside the case due to the motion of the transmission 20 whereby oil is supplied to the entire transmission 20.

As illustrated in FIG. 2, the transmission case 10 has a first inner wall 11 and a second inner wall 12. The first inner wall 11 extends in the vertical direction. The second inner wall 12 adjoins the first inner wall 11 at the bottom end. The second inner wall 12 is inclined with respect to the first inner wall 11. A border portion 13 between the first inner wall 11 and the second inner wall 12 is shaped in a convex shape that protrudes toward the inside of the transmission case 10.

Oil that scatters inside the transmission case 10 and adheres to the first inner wall 11 flows downward along the first inner wall 11 and then falls downward from the vicinity of the border portion 13. An oil receiving part 33 of a belowmentioned shift fork 24 is disposed below the border portion 13. Consequently, oil that drips down from the vicinity of the border portion 13 is effectively captured by the oil receiving part 33 disposed below the border portion 13. The oil receiving part 33 may also capture oil scattered inside the transmission case 10 in addition to the oil that drips down from the vicinity of the border portion 13.

### (Transmission 20)

The transmission 20 is provided with a rotating shaft 21, a synchronizer hub 22, a coupling sleeve 23 (example of a "sleeve"), the shift fork 24 (example of a "fork"), and a shift shaft 25.

The rotating shaft 21 is an output shaft of the transmission 20. In the present embodiment, the rotating shaft 21 extends in the horizontal direction. The synchronizer hub 22 is an annular member that surrounds the rotating shaft 21. The synchronizer hub 22 is fixed to the rotating shaft 21 with a spline fitting, for example. Teeth 22a are formed on the external circumferential surface of the synchronizer hub 22.

The coupling sleeve 23 is an annular member that surrounds the synchronizer hub 22. Teeth 23a are formed on the internal circumferential surface of the coupling sleeve 23. The teeth 23a of the coupling sleeve 23 mesh with the teeth 22a of the synchronizer hub 22.

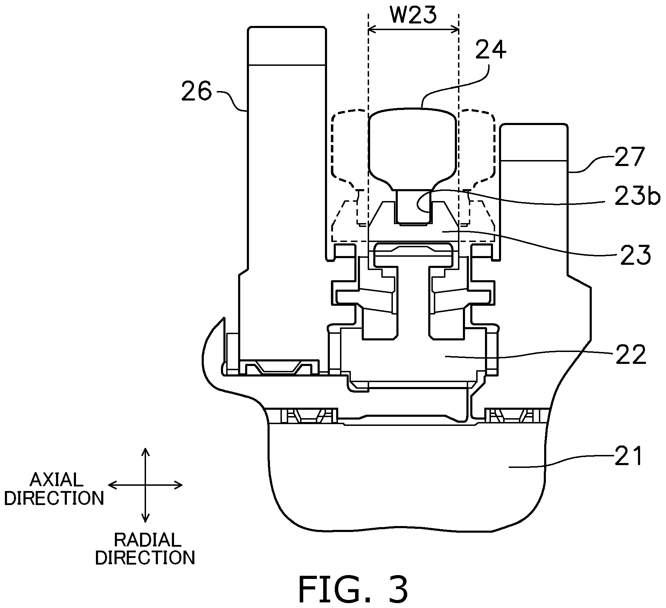

FIG. 3 is a cross-partal view of the transmission 20 parallel to the rotating shaft 21.

As illustrated in FIG. 3, transmission gears 26 and 27 are disposed on either side of the coupling sleeve 23 in the axial direction of the rotating shaft 21. The transmission gears 26 and 27 are loosely fitted to the rotating shaft 21. The coupling sleeve 23 moves toward the transmission gear 26 in the axial direction of the rotating shaft 21, and when the coupling sleeve 23 synchronizes with the transmission gear 26, the rotation of the transmission gear 26 is transmitted to the synchronizer hub 22 through the coupling sleeve 23. As a result, the rotating shaft 21 rotates. Similarly, the coupling sleeve 23 moves toward the transmission gear 27 in the axial direction of the rotating shaft 21 and, when the coupling sleeve 23 synchronizes with the transmission gear 27, the rotation of the transmission gear 27 is transmitted to the synchronizer hub 22 through the coupling sleeve 23, whereby the rotating shaft 21 rotates.

The shift fork 24 is an annular member that surrounds the coupling sleeve 23. The shift fork 24 is fixed to the shift shaft 25. The shift fork 24 is a member for moving the coupling sleeve 23 in the axial direction of the rotating shaft 21. The shift fork 24 engages with an engagement groove 23b (see FIG. 3) formed on the external circumference of the coupling sleeve 23. While the coupling sleeve 23 is a rotating member, the shift fork 24 is a nonrotating member. When the coupling sleeve 23 rotates in synchronization with the transmission gears 26 and 27, the coupling sleeve 23 slides against the shift fork 24.

As illustrated in FIG. 3, the shift fork 24 according to the present embodiment is disposed between the transmission gears 26 and 27 in the axial direction of the rotating shaft 21. Therefore, the movement range of the shift fork 24 is restricted by the transmission gears 26 and 27. The outer diameter of the shift fork 24 is smaller than the outer diameter of the transmission gear 26 which is larger than the transmission gear 27 in the radial direction perpendicular to the axial direction of the rotating shaft 21. In this way, since the shift fork 24 does not protrude beyond the transmission gear 26, the size of the transmission 20 can be reduced.

In the present embodiment, while the outer diameter of the transmission gear 27 is larger than the outer diameter of the shift fork 24 in the radial direction, the outer diameter of the shift fork 24 may be equal to or smaller than the outer diameter of the transmission gear 27.

The shift shaft 25 supports the shift fork 24. The shift shaft 25 is disposed parallel to the rotating shaft 21. The shift shaft 25 is able to move in the axial direction of the rotating shaft 21. The shift shaft 25 is moved in the axial direction in response to a shift change operation by an operator. As a result, the shift fork 24 moves in the axial direction of the rotating shaft 21.

### (Shift fork 24)

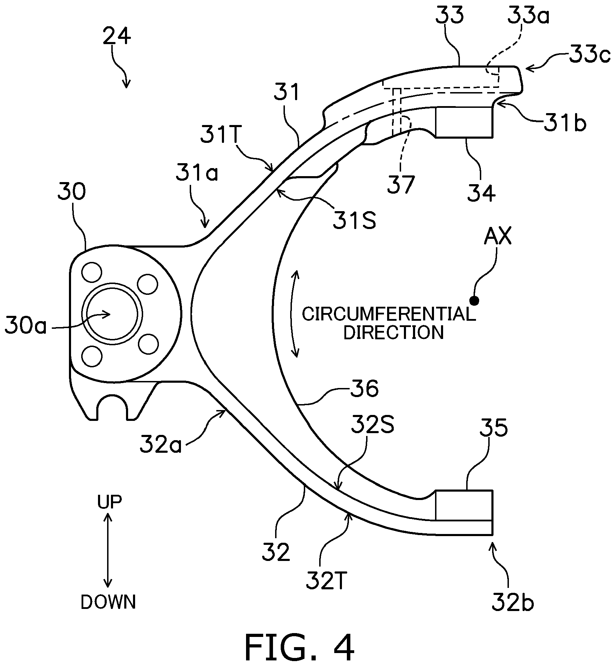

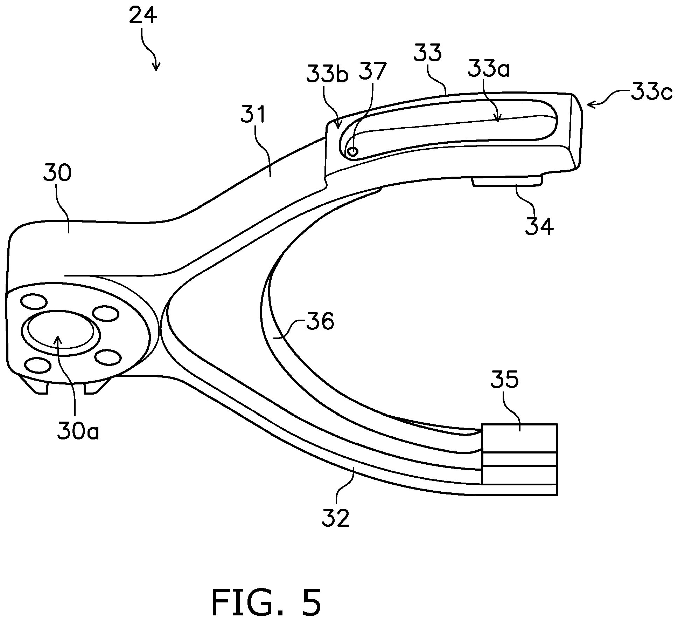

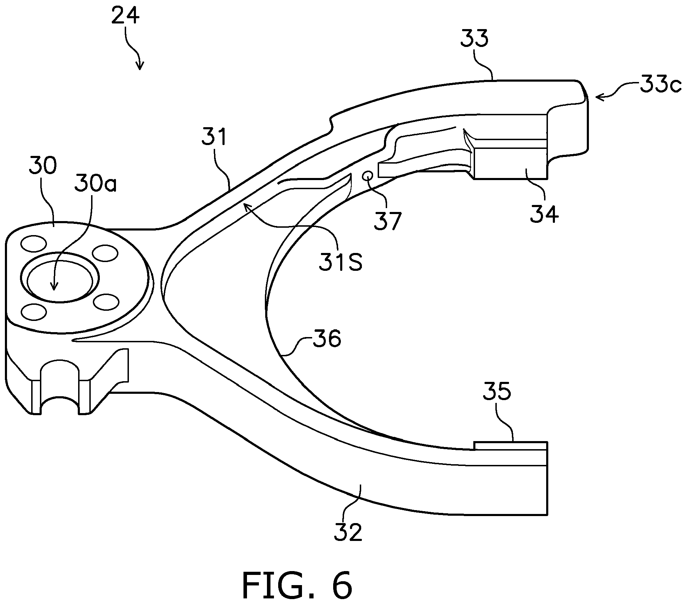

A configuration of the shift fork 24 will be explained with reference to the drawings. FIG. 4 is a side view of the shift fork 24 as seen from the axial direction of the rotating shaft 21. FIG. 5 is a perspective view of the shift fork 24 as seen from above. FIG. 6 is a perspective view of the shift fork 24 as seen from below.

The shift fork 24 has a support part 30, a first arm part 31, a second arm part 32, the oil receiving part 33, a first pawl part 34, a second pawl part 35, a rib 36, and an oil supply hole 37.

The support part 30 is disposed between the first arm part 31 and the second arm part 32. The support part 30 has an insertion hole 30a. The shift shaft 25 illustrated in FIG. 1 is inserted into the insertion hole 30a. The support part 30 is supported by and fixed to the shift shaft 25 inserted into the insertion hole 30a. In the present embodiment, the supporting force for supporting the shift fork 24 acts only on the shift shaft 25 and the support part 30. The function for supporting the shift fork 24 is assumed only by the support part 30, and the first and second arm parts 31 and 32 do not assume the role of supporting the shift fork 24. Therefore, it can be said that the location where the supporting force acts within the shift fork 24 is the support part 30 and the locations where the supporting force does not act is the first and second arm parts 31 and 32.

The first arm part 31 extends from the support part 30 in the circumferential direction centered on the axial center AX of the rotating shaft 21. The first arm part 31 extends obliquely upward from the support part 30. A base end portion 31a connected to the support part 30 within the first arm part 31 is a fixed end portion, and a tip end portion 31b on the opposite side from the support part 30 is a free end portion.

The first arm part 31 is disposed above the coupling sleeve 23 as illustrated in FIG. 1. In the present embodiment, while the first arm part 31 covers around one quarter of the external circumference of the coupling sleeve 23, the overall length of the first arm part 31 may be changed as appropriate.

The first arm part 31 has an internal circumferential surface 31S and an external circumferential surface 31T. The internal circumferential surface 31S faces the coupling sleeve 23 as illustrated in FIG. 1. The external circumferential surface 31T is provided on the opposite side of the internal circumferential surface 31S. The internal circumferential surface 31S and the external circumferential surface 31T both extend in the circumferential direction.

The second arm part 32 extends from the support part 30 in the circumferential direction centered on the axial center AX of the rotating shaft 21. The second arm part 32 extends obliquely downward from the support part 30. A base end portion 32a connected to the support part 30 within the second arm part 32 is a fixed end portion, and a tip end portion 32b on the opposite side from the support part 30 is a free end portion.

The second arm part 32 is disposed below the coupling sleeve 23 illustrated in FIG. 1. In the present embodiment, while the second arm part 32 covers around one quarter of the external circumference of the coupling sleeve 23, the overall length of the second arm part 32 may be changed as appropriate.

The second arm part 32 has an internal circumferential surface 32S and an external circumferential surface 32T. The internal circumferential surface 32S faces the coupling sleeve 23 as illustrated in FIG. 2. The external circumferential surface 32T is provided on the opposite side of the internal circumferential surface 32S. The internal circumferential surface 32S and the external circumferential surface 32T both extend in the circumferential direction.

The oil receiving part 33 is disposed on the first arm part 31. The oil receiving part 33 is disposed on the external circumferential surface 31T of the first arm part 31.

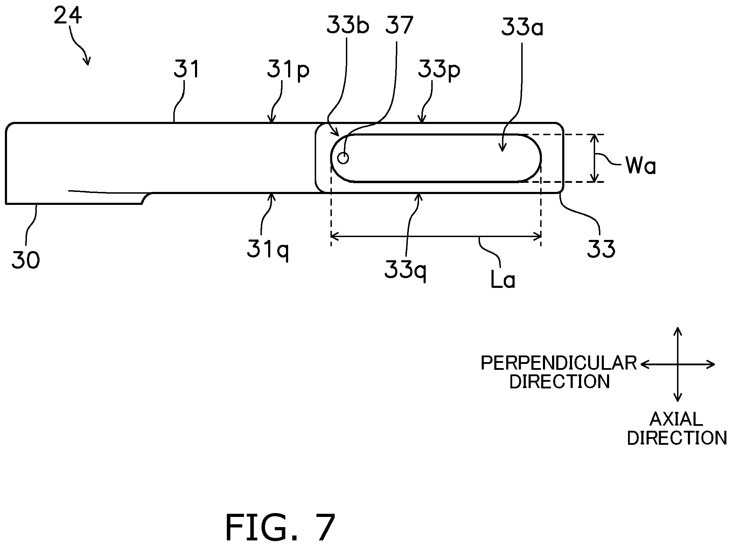

FIG. 7 is a top view illustrating the shift fork 24 from above in the vertical direction. The oil receiving part 33 has an elongated hole 33a that extends in a direction (referred to below as "perpendicular direction") perpendicular to the axial direction of the rotating shaft as seen in the top view. The elongated hole 33a is formed on an upper surface 33b of the oil receiving part 33. The elongated hole 33a opens upward. The elongated hole 33a captures oil that drips down from the vicinity of the border portion 13 of the first inner wall 11 and the second inner wall 12 illustrated in FIG. 1, and oil that scatters inside the transmission case 10. The elongated hole 33a collects the captured oil. The oil collected in the elongated hole 33a is supplied to the external circumferential surface of the coupling sleeve 23 via the oil supply hole 37.

As seen in the top view, the length La of the elongated hole 33a in the perpendicular direction is greater than the maximum width Wa of the elongated hole 33a in the axial direction of the rotating shaft 21. Therefore, lubrication of the coupling sleeve 23 can be maintained as desired since both the oil that drips down from the vicinity of the border portion 13 and the oil that scatters inside the transmission case 10 can be effectively captured.

The length La of the elongated hole 33a is preferably 1.5 times or more the width Wa, and more preferably 2.0 times or more. As a result thereof, the capture efficiency of oil by the elongated hole 33a can be further improved.

In the top view, a first side surface 33p of the oil receiving part 33 smoothly joins a first side surface 31p of the first arm part 31. No curved step is provided between the first side surface 33p of the oil receiving part 33 and the first side surface 31p of the first arm part 31. In the present embodiment, the first side surface 33p of the oil receiving part 33 is roughly flush with the first side surface 31p of the first arm part 31.

Similarly, in the top view, a second side surface 33q of the oil receiving part 33 joins smoothly with a second side surface 31q of the first arm part 31. No curved step is provided between the second side surface 33q of the oil receiving part 33 and the second side surface 31q of the first arm part 31. In the present embodiment, the second side surface 33q of the oil receiving part 33 is roughly flush with the second side surface 31q of the first arm part 31.

As illustrated in FIG. 4-6, the oil receiving part 33 is disposed on the tip end portion 31b of the first arm part 31. A tip end portion 33c of the oil receiving part 33 protrudes further than the tip end portion 31b of the first arm part 31 in the circumferential direction. The protruding length of the tip end portion 33c of the oil receiving part 33 in the circumferential direction from the tip end portion 31b of the first arm part 31 may be changed as appropriate.

The oil receiving part 33 is positioned above a pawl part 34 in the vertical direction. Therefore, the oil receiving part 33 overlaps the pawl part 34 in the vertical direction. In the present embodiment, only a portion of the oil receiving part 33 overlaps the pawl part 34 in the vertical direction. The length in the perpendicular direction that the oil receiving part 33 overlaps the pawl part 34 may be changed as appropriate.

The tip end portion 33c of the oil receiving part 33 protrudes further than the pawl part 34 in the circumferential direction. The length that the tip end portion 33c of the oil receiving part 33 protrudes from the pawl part 34 in the circumferential direction may be changed as appropriate.

In the present embodiment, the oil receiving part 33 is formed integrally with the first arm part 31. The first arm part 31 and the oil receiving part 33 can be made integrally by machining a forged raw material component for the shift fork 24.

As illustrated in FIG. 4-6, the first pawl part 34 is disposed on the internal circumferential surface 31S of the first arm part 31. The second pawl part 35 is disposed on the internal circumferential surface 32S of the second arm part 32. The first pawl part 34 and the second pawl part 35 are both engaged to the engagement groove 23b of the coupling sleeve 23 illustrated in FIG. 3.

The rib 36 is disposed so as to cross from the internal circumferential surface 31S of the first arm part 31 to the internal circumferential surface 32S of the second arm part 32. In the present embodiment, the rib 36 is disposed so as to join the first pawl part 34 and the second pawl part 35. The rib 36 is a member for reinforcing the shift fork 24.

The oil supply hole 37 communicates between the bottom surface of the elongated hole 33a formed in the oil receiving part 33 and the internal circumferential surface 31S of the first arm part 31. The oil supply hole 37 supplies oil collected in the elongated hole 33a to the external circumferential surface of the coupling sleeve 23.

### (Size of the shift fork 24)

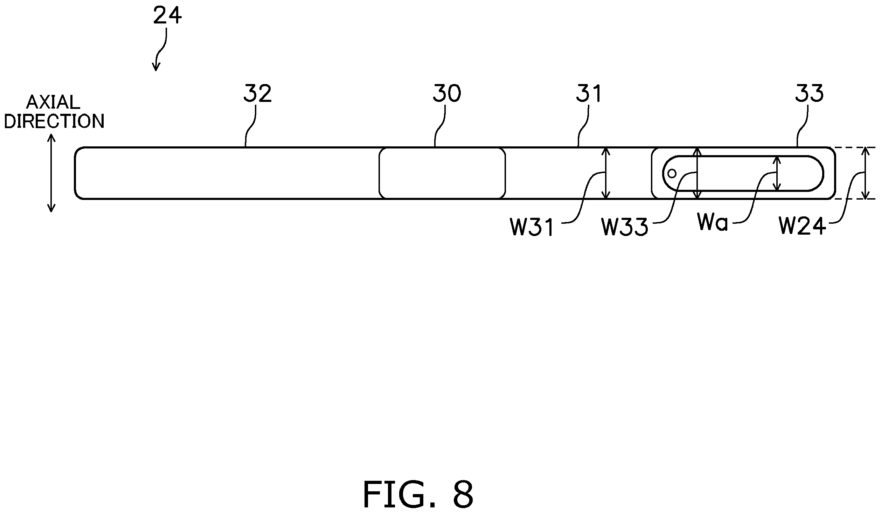

The size of the shift fork 24 will be explained with reference to the drawings. FIG. 8 is a development view illustrating the external circumferential surface of the shift fork 24 developed in a plan view.

The maximum width W33 of the oil receiving part 33 in the axial direction of the rotating shaft 21 is equal to or less than the maximum width W31 of the first arm part 31. In the present embodiment, while the maximum width W33 of the oil receiving part 33 is roughly the same as the maximum width W31 of the first arm part 31, the maximum width W33 may be smaller than the maximum width W31 of the first arm part 31.

The maximum width W33 of the oil receiving part 33 in the axial direction of the rotating shaft 21 is equal to or less than the maximum width W23 (not illustrated in FIG. 8; see FIG. 3) of the coupling sleeve 23. In the present embodiment, while the maximum width W33 of the oil receiving part 33 is roughly the same as the maximum width W23 of the coupling sleeve 23, the maximum width W33 may be smaller than the maximum width W23 of the coupling sleeve 23.

The average width W24 of the entire shift fork 24 in the axial direction of the rotating shaft 21 is smaller than ±10% of the maximum width W33 of the oil receiving part 33 and larger than the maximum width Wa of the elongated hole 33a. The average width W24 of the entire shift fork 24 is calculated by measuring the intervals between two straight lines obtained by performing collinear approximation with the least-squares method on both end sides of the shift fork 24 in the axial direction, at ten points derived by dividing the entire length of the shift fork 24 in a direction perpendicular to the axial direction into 11 equal parts, and then deriving the arithmetical mean of the measured values. The ±10% of the maximum width W33 of the oil receiving part 33 signifies a range of 0.9 to 1.1 times the maximum width W33. Imparting the range to the maximum width W33 of the oil receiving part 33 in this way takes into account the case of a gradient being unavoidably provided to the forged raw material component for the shift fork 24, and the case of a step being unavoidably provided between the oil receiving part 33 and the first arm part 31 when machining the raw material component.

### (Characteristics)

The shift fork 24 has the oil receiving part 33 disposed on the first arm part 31. The oil receiving part 33 has an elongated hole 33a that extends in a direction perpendicular to the axial center AX of the rotating shaft 21 as seen in the top view. Therefore, oil dripping down from the inner wall of the transmission case 10 and oil scattering inside the transmission case 10 can be effectively captured while suppressing an increase in the size of the shift fork.

The maximum width W33 of the oil receiving part 33 in the axial direction of the rotating shaft 21 is equal to or less than the maximum width W31 of the first arm part 31. Therefore, the shift fork 24 can be made more compact in the axial direction.

The maximum width W33 of the oil receiving part 33 in the axial direction of the rotating shaft 21 is equal to or less than the maximum width W23 of the coupling sleeve 23. Therefore, the size of the transmission 20 can be reduced by making the gap between the transmission gears 26 and 27 narrower since interference between the transmission gears 26 and 27 disposed on both sides of the coupling sleeve 23, and the oil receiving part 33 can be suppressed.

The average width W24 of the entire shift fork 24 in the axial direction of the rotating shaft 21 is smaller than ±10% of the maximum width W33 of the oil receiving part 33 and larger than the maximum width Wa of the elongated hole 33a. Therefore, the shift fork 24 can be made more compact overall in the axial direction.

The tip end portion 33c of the oil receiving part 33 protrudes further than the pawl part 34 in the circumferential direction. Therefore, the capture efficiency of oil by the elongated hole 33a can be further improved by increasing the length La of the elongated hole 33a.

The tip end portion 33c of the oil receiving part 33 protrudes further than the tip end portion 31b of the first arm part 31 in the circumferential direction. Therefore, the capture efficiency of oil by the elongated hole 33a can be further improved by increasing the length La of the elongated hole 33a.

### (Modified examples)

While the size of the shift fork 24 is explained with reference to FIG. 8 in the above embodiment, the relationships in size between the widths of the various locations may be changed as appropriate.

While the tip end portion 33c of the oil receiving part 33 is formed so to protrude further than both the pawl part 34 and the tip end portion 31b of the first arm part 31 in the circumferential direction in the above embodiment, the position of the oil receiving part 33 may be changed as appropriate.

While the oil receiving part 33 is formed integrally with the first arm part 31 in the above embodiment, the oil receiving part 33 may be formed separately from the first arm part 31.

While the oil receiving part 33 is disposed below the border portion 13 of the first inner wall 11 and the second inner wall 12 in the above embodiment, the oil receiving part 33 may be disposed in a position offset from below the border portion 13. In the above case, oil can be captured effectively since the elongated hole 33a is provided in the oil receiving part 33.

### REFERENCE SIGNS LIST

- 100: Gearbox
- 10: Transmission case
- 11: First inner wall
- 12: Second inner wall
- 13: Border portion
- 20: Transmission
- 21: Rotating shaft
- AX: Axial center
- 22: Synchronizer hub
- 23: Coupling sleeve
- 24: Shift fork
- 25: Shift shaft
- 30: Support part
- 31: First arm part
- 31b: Tip end portion of first arm part
- 32: Second arm part
- 33: Oil receiving part
- 33a: Elongated hole
- 33b: Upper surface
- 33c: Tip end portion of oil receiving part
- 34: First pawl part
- 35: Second pawl part
- 36: Rib
- 37: Oil supply hole
- Wa: Maximum width of elongated hole
- W23: Maximum width of coupling sleeve
- W24: Average width of shift fork
- W31: Maximum width of first arm part
- W33: Maximum width of oil receiving part

## Claims

1. A transmission comprising:
a rotating shaft;
a sleeve configured to rotate around an axial center of the rotating shaft;
a fork engaged to an external circumference of the sleeve; and
a shift shaft disposed parallel to the rotating shaft and supporting the fork,
the fork including:
a support part supported by the shift shaft;
a first arm part extending from the support part in a circumferential direction of the rotating shaft and disposed above the sleeve; and
an oil receiving part disposed on the first arm part; wherein
the oil receiving part has an elongated hole that extends in a direction perpendicular to an axial direction of the rotating shaft in a top view.

2. The transmission according to claim 1, wherein
a maximum width of the oil receiving part in the axial direction of the rotating shaft is equal to or less than a maximum width of the first arm part.

3. The transmission according to claim 1 or 2, wherein
a maximum width of the oil receiving part in the axial direction of the rotating shaft is equal to or less than a maximum width of the sleeve.

4. The transmission according to any one of claims 1 to 3, wherein
the fork further includes a second arm part extending from the support part in the circumferential direction and disposed below the sleeve.

5. The transmission according to claim 4, wherein
an average width of the fork in the axial direction of the rotating shaft is smaller than ±10% of the maximum width of the oil receiving part and larger than a maximum width of the elongated hole.

6. The transmission according to any one of claims 1 to 5, wherein
the fork includes a pawl part disposed on an internal circumferential surface of the first arm part and engaged to the sleeve, and
the oil receiving part is positioned above the pawl part in a vertical direction.

7. The transmission according to claim 6, wherein
a tip end portion of the oil receiving part on the opposite side from the support part protrudes further than the pawl part in the circumferential direction.

8. The transmission according to any one of claims 1 to 7, wherein
a tip end portion of the oil receiving part on the opposite side from the support part protrudes further than a tip end portion of the first arm part on the opposite side from the support part.

9. The transmission according to any one of claims 1 to 8, wherein
the oil receiving part is formed integrally with the first arm part.

10. The transmission according to any one of claims 1 to 9, wherein
the fork includes an oil supply hole that communicates between a bottom surface of the elongated hole and an internal circumferential surface of the first arm part.

11. A work vehicle comprising:
the transmission according to any one of claims 1 to 10, and
a transmission case configured to contain the transmission.

12. The work vehicle according to claim 11, wherein
the transmission case has
a first inner wall extending in a vertical direction,
a second inner wall adjoined to a lower end of the first inner wall and inclined with respect to the first inner wall, and
the oil receiving part is disposed below a border portion between the first inner wall and the second inner wall.
